# EUROPEAN PATENT APPLICATION

(11) **EP 4 064 082 A1**
(43) Date of publication of application: **28.09.2022**
(21) Application number: 21163988.5
(22) Date of filing: 22.03.2021
(51) Int. Cl.: G06F 21/35, H04L 29/06

(54) **DATA INJECTION SYSTEM AND METHOD THEREOF**

(71) Applicant: E-Trustysolutions, 75008 Paris (FR)
(72) Inventor: DELCAMP DOS SANTOS, Eric, 75002 PARIS (FR); FOSKETT, Marc, 95520 OSNY (FR)
(74) Representative: Argyma

(57) **Abstract**

The invention concerns a data injection system (1) configured to perform a data injection which allows a user to use a portable computing device (102) to provide a set of data (RSD) required by a webpage executed by a data injection destination (10) which comprises a personal terminal (101) utilized to execute and display to the user the webpage of a website. The data injection system (1) comprises a data injection server (103) and the service application (113). The data injection server (103) is configured to generate a token according to a public key corresponding to the webpage; to generate, a mapping request reply comprising types of information of the required set of data (RSD); and to transfer to the data injection destination (10) an encrypted data injection package generated by the service application (113). The service application (113), being executed by the portable computing device (102), is configured to generate said encrypted data injection package, according to the mapping request reply generated by the data injection server (103), wherein the encrypted data injection package comprises the required set of data (RSD) retrieved according to the mapping request reply. After receiving the encrypted data injection package sent by the data injection server (103), the data injection destination (10) retrieves, from the encrypted data injection package, the required set of data (RSD) required by the webpage of the website.

## Description

### FIELD OF THE INVENTION

The present invention concerns a data injection system and a method thereof.

The present invention relates to, in particular, a data injection system and a method thereof which allow a user to conveniently, securely and efficiently provide a website with a set of data for accessing said website.

### BACKGROUND OF THE INVENTION

Nowadays using Internet is part of people's daily lives. Numerous and various websites require users to perform a user authentication by providing them with login credentials. The login credentials may comprise, for instance, a username (or an email address) and a password. However, it may become challenging and difficult for a user to remember different login credentials that he/she utilizes to access different websites. Such challenges would force the user to memorize a great number of passwords or even usernames (or email addresses), or to simplify the usernames and/or passwords, or to access different websites by using the same login credentials, etc. The data security may accordingly be reduced, e.g. a greater risk of data leaks.

Likewise, the rise of e-commerce forces the user to manually enter payment-related information required by online shopping processes, such as the user's postal address(es) and credit card number(s). This data input stage may be tedious, which makes the dropout rate of an online shopping process is close to 80%. In order to simply the data input stage, some browsers that the user utilizes may allow to store the data (e.g. payment-related information, login credentials) for websites the user already visit. However, since there is no standardized way to name form fields of the webpage, the browser struggles to correctly map form fields and corresponding data. Furthermore, when more computing devices store the data input by the user, the risk of data leaks is increased.

Another risk may be occurred during the data input stage while the user manually enters the data through an input device such as a keyboard. This makes the login credentials and/or payment-related information susceptible to be detected and captured by a spyware or simply by a person surrounding the user.

Some data injection systems and methods are thus proposed to avoid the above-mentioned drawbacks. The data injection systems and methods allow the user to use his/her smartphone (or another portable computing device), instead of using the input device, to provide the website with the data. The use of a Quick Response (QR) code may facilitate the data injection. In this way, the data may no longer be needed be manually entered.

However, the data communication and transmission between the user's portable computing device (e.g. smartphone) and the website does still not have a sufficient guarantee in terms of data security.

There is hence a need of a data injection system and a method thereof which allow a user to conveniently, securely and efficiently provide a website with a set of data required for accessing the website, e.g. login to the website and/or provide the website with the user's payment information, etc.

### SUMMARY OF THE INVENTION

The invention concerns a data injection system configured to perform a data injection which allows a user to use a portable computing device to provide a set of data required by a webpage executed by a data injection destination. The data injection destination comprises a personal terminal utilized to execute and display to the user the webpage of a website. The data injection system comprises a data injection server and the service application. The data injection server is configured to generate a token according to a public key corresponding to the webpage; to generate, a mapping request reply comprising types of information of the required set of data; and to transfer to the data injection destination an encrypted data injection package generated by the service application. The service application, being executed by the portable computing device, is configured to generate said encrypted data injection package, according to the mapping request reply generated by the data injection server, wherein the encrypted data injection package comprises the required set of data retrieved according to the mapping request reply. After receiving the encrypted data injection package sent by the data injection server, the data injection destination retrieves, from the encrypted data injection package, the required set of data required by the webpage of the website.

The invention allows thus following advantages. Firstly, the user's important data (i.e. the above-mentioned required set of data) does no longer need to be stored in a centralized storage means. Secondly, the user keeps a full control on their data. In addition, compared to the conventional methods, the data injection of the invention is more flexible and user friendly. The data injection of the invention also prevents from a data leak because the user does no longer need to fill the fields of the webpage by manually entering the data through a keyboard. The set of data required by the website will not be detected by a spyware or by a person surrounded by the user. It allows therefore the user to set up stronger passwords which may be different from each other and are used to access different websites. The stronger passwords can be passwords with higher complexity and greater entropy. The user does no longer need to manually enter the passwords each time to access respective websites. Furthermore, it also allows the service application to auto-generate stronger passwords.

According to an embodiment, a secure channel configured to allow safe data transfer between the data injection destination and the data injection server, is created by using the token.

According to an embodiment, the secure channel is established between a browser executed by the personal terminal and the data injection server.

According to an embodiment, the service application is configured to generate a data injection package comprising the required set of data retrieved according to the token and the types of information of the required set of data, wherein said types of information are contained in the mapping request reply.

According to an embodiment, the service application is configured to encrypt the data injection package by using the public key.

According to an embodiment, the service application is activated by using a data injection identification code generated according to the token.

According to an embodiment, the data injection identification code comprises a Uniform Resource Locator (URL) address configured to direct a browser executed by the portable computing device in order to activate the service application.

According to an embodiment, said data injection identification code is one of following codes: a Quick Response (QR) code, a Universal Product Code (UPC), or another data encoding scheme or symbol.

According to an embodiment, during the generation of the data injection identification code, the personal terminal verifies whether a HTTP cookie exists and is accessible by a browser of the personal terminal, the HTTP cookie being configured to store information utilized to check whether the portable computing device and the personal terminal are a same computing device.

According to an embodiment, if the browser of the portable computing device is previously directed to the URL address and/or previously generates data regarding the data injection identification code, the required set of data corresponding to the data injection identification code is already stored and is accessible by the portable computing device.

According to an embodiment, the personal terminal and the portable computing device are a same computing device.

According to an embodiment, the data injection identification code displayed by the personal terminal is scanned by using an image capturing device of the portable computing device, so that the URL address contained in the scanned data injection identification code directs the browser of the portable computing device to the URL address, which triggers the execution of the service application.

According to an embodiment, if said required set of data corresponding to the data injection identification code is found and is accessible by the browser of the portable computing device, the service application is activated by an automatic redirect performed by the browser of the portable computing device to the URL address.

According to an embodiment, if said required set of data cannot be found or is not accessible by the browser of the portable computing device, the service application is activated by an automatic redirect performed by the user clicking on the data injection identification code displayed by the portable computing device, so as to direct the browser of the portable computing device to the URL address.

According to an embodiment, the service application sends to the data injection server the token and a mapping request for types of information of the required set of data.

According to an embodiment, the encrypted data injection package is transferred, via the secure channel, to the webpage executed by the browser of the personal terminal.

According to an embodiment, the public key and a corresponding private key are generated by the data injection destination during a loading of the webpage displayed by the personal terminal, and is transmitted to the data injection server.

According to an embodiment, the data injection destination is configured to decrypt, by using the private key, the encrypted data injection package to obtain the required set of data.

According to an embodiment, each of fields of the webpage is filled with a corresponding data portion contained in the required set of data obtained by decrypting the encrypted data injection package.

According to an embodiment, the webpage filled with the data portions provided in the required set of data is verified by a website server (104) hosting the website, in order to determine whether the user can continue visiting the website.

According to an embodiment, the service application is a mobile application or a web application executed by the portable computing device, or a virtual mobile application executed by a browser of the portable computing device.

According to an embodiment, the required set of data is previously stored in a storage means accessible by the portable computing device.

According to an embodiment, the required set of data comprises login credentials and/or the payment-related information, or any data requested by a web form.

According to an embodiment, the injection server executes an Application Programming Interface (API) configured to proceed with its data transmission and data communication with the service application executed by the portable computing device.

The invention also concerns a data injection method configured to perform a data injection which allows a user to use a portable computing device to provide a set of data required by a webpage executed by a data injection destination. The data injection destination comprises a personal terminal utilized to execute and display to the user the webpage of a website. The data injection method comprises steps performed by the data injection system as described above.

### BRIEF DESCRIPTION OF THE DRAWINGS

The invention will be better understood on reading the description that follows, and by referring to the appended drawings given as non-limiting examples, in which identical references are given to similar objects and in which:
Figure 1 illustrates a data injection system configured to execute a data injection method according to an embodiment of the invention.
Figure 2 is a flowchart of steps of the data injection method according to an embodiment of the invention.

### DETAILED DESCRIPTION

The data injection system 1, comprising a service application 113 and a data injection server 103, is configured to execute a data injection method 200 according to an embodiment of the invention. The data injection system 1 and the data injection method 200 are configured to perform, under control of the data injection server 103, a data injection which allows a user to use a portable computing device 102 to provide a set of data RSD required by a webpage executed by the data injection destination 10.

The data injection destination 10 comprises a personal terminal 101. The personal terminal 101 is utilized to display to the user the webpage of a website hosted by the website server 104. According to an embodiment, the webpage is executed and displayed by a web browser ("browser" hereafter) executed by the personal terminal 101. Preferably, the data injection destination 10 comprises further the website server 104. The data injection system 1 and the data injection method 200 are configured to perform the data injection which allows the user to provide the set of data RSD required by the webpage of the website. The user does no longer need to enter manually, by using an input device of the personal terminal 101, the required set of data RSD to the webpage. Such a data injection is secure, convenient and efficient. The website receives thus the required set of data RSD transmitted via the webpage and handles then the received set of data RSD.

The webpage comprises preferably a plurality of fields to be filled by the user. Data entered for filling the fields of the webpage constitutes the required set of data RSD. According to various embodiments, the required set of data RSD (i.e. the set of data RSD required by the website) may comprise login credentials, and/or payment-related information, or any data requested by a web form, utilized by the user to access the website and/or to use functions provided by the website. The user's login credentials comprise, for example, a username and/or an e-mail address, and a password to be utilized in a user authentication process. The payment-related information may comprise a postal address and/or credit card number(s) to be utilized in an online shopping process. It is noted that the invention is not limited to types of information of the set of data RSD required by the website.

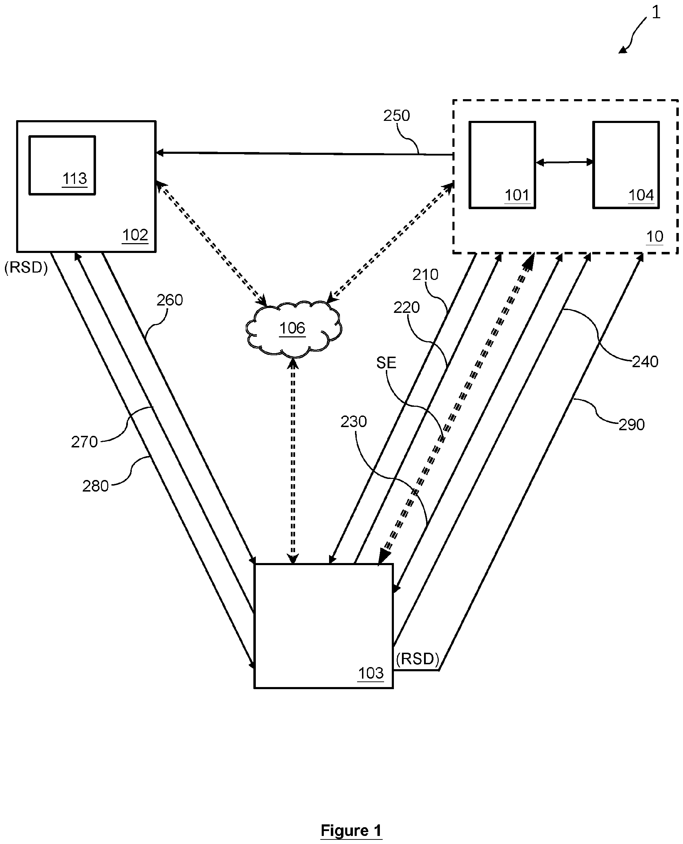

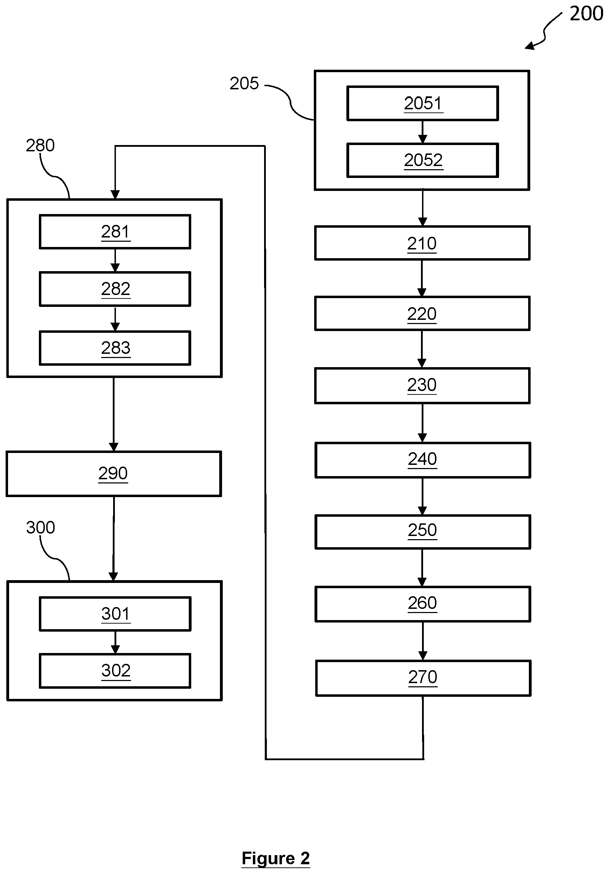

For ease of comprehension, a part of the steps of the data injection method 200 is shown in Figure 1 so as to clearly depict a data flow among the data injection destination 10, the portable computing device 102 and the data injection server 103. Some other steps (e.g. the data injection step 300) performed solely by one of the above-mentioned devices or servers, without interacting with another device or server, is not depicted in Figure 1. As for Figure 2, it is a flowchart of the steps of the data injection method 200 according to an embodiment of the invention.

The above-mentioned devices and servers 101 to 104 (which will be described more in detail in the following paragraphs), are connected to one another via a network 106, in order to perform data communication and data transmission (i.e. sending and/or receiving data) among the devices and servers 101 to 104. More precisely, at least one of, or preferably each one of the devices and servers 101 to 104 (i.e. the personal terminal 101, the portable computing device 102, the data injection server 103, and the website server 104) comprises a network interface being installed in order to interface with the network 106 and to perform data communication and transmission according to the network protocol(s) utilized to implement the network 106.

The network 106 is preferably implemented as a single network or, alternatively, a combination of multiple networks. The invention is not limited to the type(s) of network(s) utilized to implement the network 106. One or plural types selected among following wired and wireless networks, can be utilized to implement the network 106 without departing from the scope of the invention: the Internet, the Ethernet, wireless networks (e.g., Wi-Fi, Bluetooth, wide area network (WAN), personal area network (PAN), etc.), a cellular network according to 2G, 3G, 4G or 5G telecommunications standards, and/or other appropriate types of communication networks.

In addition, the data injection system 1 comprises preferably a data storage module configured to store at least a portion of data generated and/or received during the execution of the data injection method 200. The data storage module may be any combination of local storage means built in one or several of the above-mentioned devices and servers 101 to 104. Alternatively, the data storage module may be a remote data storage means accessible by said devices and servers 101 to 104.

The personal terminal 101 is utilized to display the webpage comprising the fields for requiring the set of data RSD. More precisely, the personal terminal 101 comprises a computing processor to executes an operation system, one or plural browsers, computations and instructions to be executed by the personal terminal 101. The computing processor is preferably implemented by a central processing unit (CPU) of a computing device. The invention is not limited to the implementation of the computing processor. Other processors or coprocessors can be utilized to implement the computing processor.

According to an embodiment, the webpage is executed and displayed by the browser executed by the personal terminal 101. The browser is a software application, executed by the computing processor of the personal terminal 101, for accessing information on the World Wide Web (WWW).

As mentioned above, the webpage comprises the fields provided so that the data entered to fill the fields constitutes the required set of data RSD. In an embodiment where the webpage is a login webpage, the data entered by the user to fill the fields comprises the login credentials utilized by the user.

The personal terminal 101 comprises preferably, or is preferably connected to, a data output device and a data input device. The personal terminal 101 is configured to allow the user to use one of following means to connect to the website: by entering in the browser a Uniform Resource Locator (URL) address of the website, or by clicking on a button displayed by a screen of the personal terminal 101, wherein the button comprises a link to the website. The data output device and the data input device can be respectively a display medium (e.g. a screen, a television) and a keyboard or a graphics tablet. Alternatively, the personal terminal 101 comprises a touchscreen which is utilized as the data output device and also the data input device. The personal terminal 101 can be one of following devices comprising a display means: a personal computer (PC), a tablet computer, a notebook computer, etc. Other similar devices can be utilized as the personal terminal 101 without departing from the scope of the present disclosure.

The portable computing device 102 comprises a mobile computing processor configured to execute a mobile operation system, mobile applications (e.g. the service application 113), one or plural browsers, computations and instructions to be executed by the portable computing device 102. The service application 113, executed by the portable computing device 102, is configured to facilitate the data injection. The service application 113 is a mobile application or a web application, developed and provided by a provider of the data injection server 103. According to another embodiment, the service application 113 is a virtual mobile application executed by a browser executed by the mobile computing processor of the portable computing device 102. The browser is a mobile application, executed by the mobile computing processor of the portable computing device 102, for accessing information on the World Wide Web (WWW)

The portable computing device 102 is preferably a smartphone, such as an iPhone running an iOS operating system, a Google phone, a Window Mobile, a smartphone running an Android operating system, or other smartphones running other operating systems. Alternatively, the portable computing device 102 may be a tablet (e.g., iPad, Galaxy, etc), or a personal digital assistant (PDA), etc. It is noted that the invention is not limited to the types of wireless computing devices utilized by the user. Other types of wireless computing devices can be utilized as the portable computing device 102 without departing from the scope of the present disclosure.

According to an embodiment, the personal terminal 101 and the portable computing device 102 can be a same computing device, such as a smartphone utilized by the user.

The portable computing device 102 may further comprise an image capturing device (e.g. a camera) configured to scan a data injection identification code (which will be described in detail in the following paragraphs) displayed on the screen of the personal terminal 101. The portable computing device 102 executes a code reading software configured to decode the captured image comprising the data injection identification code. In addition, according to an embodiment, the user may scan the data injection identification code by using the service application 113 to activate the camera.

According to an embodiment, the required set of data RSD (e.g. the login credentials) previously provided by the user, may be stored in the portable computing device 102 and may be accessible by the service application 113. More precisely, the required set of data RSD is preferably stored in a local storage means of the portable computing device 102 or, alternatively, in a remote storage means accessible by the portable computing device 102.

The website server 104 is configured to host the website which requires, via the webpage displayed on the screen of the personal terminal 101, the user to provide the set of data RSD. The website server 104 comprises a server computing module to executes an operation system, computations and instructions to be executed by the website server 104. Other functions of the website server 104 will be described in detail in following paragraphs. The invention is not limited to the implementation of the website server 104.

It is to note that some functions and computations regarding the webpage/website may be executed by the personal terminal 101 and then be transmitted to the website server 104, or alternatively, be executed by the website server 104 and then be transmitted to the personal terminal 101, In addition, data transmitted to/received from the data injection destination 10 can be one of following circumstances: data transmitted to/received from the webpage executed and displayed by the personal terminal 101; data transmitted directly to/received directly from the website server 104; data transmitted indirectly, through (the webpage executed by) the personal terminal 101, to the website server 104; or data received indirectly, through (the webpage executed by) the personal terminal 101, from the website server 104.

The data injection server 103 acts as an intermediary between the portable computing device 102 and the data injection destination 10 to facilitate the data injection performed to provide the data injection destination 10 with the required set of data RSD. As mentioned below in the paragraphs describing in detail the data injection method 200, the data injection server 103 acts as a secure data relay which performs at least following two functions: (1) communicating directly with the service application 113 executed by the portable computing device 102 on types of information of the required set of data RSD, and (2) receiving, from the portable computing device 102, an encrypted data injection package generated according to a public key and the required set of data RSD.

The data injection server 103 executes preferably an Application Programming Interface (API) in order to perform various functions as well as to interact with the corresponding service application 113, devices and/or servers such as the portable computing device 102 and the data injection destination 10. The data communication and data transmission regarding the data injection is performed between the API executed by the data injection server 103 and the corresponding service application 113 executed by the portable computing device 102.

Figure 2 illustrates the steps 205 and 210 to 300 of the data injection method 200 according to an embodiment of the invention.

The setting step 205, comprising an onboarding step 2051 and an integration step 2052, is preferably performed prior to the steps 210 to 300 so as to establish an environment allowing the execution of the steps 210 to 300.

According to an embodiment, during the onboarding step 2051, a set of setting data comprising properties such as *"app*/*domain", "context", "mapping"* and *"send_method"* is defined. Preferably, the administrator of the website (hosted on the website server 104) defines, via an API call to the API executed by the data injection server 103, the set of setting data. One example of the set of setting data is described below:

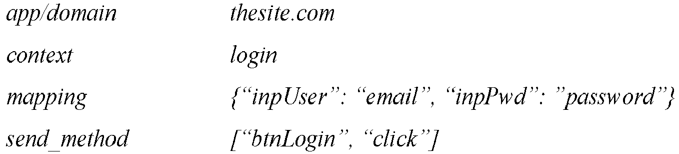

The property *"app*/*domain"* corresponds to a value *"thesite.com"* which is the name/address/subdomain of the website hosted on the website server 104. The property *"context"* corresponds to a value *"login"* which indicates an activity (e.g. a user authentication process) which requires the user to provide the set of data RSD (e.g. login credentials). The property *"mapping"* defines the types of information (e.g. the email address *"inpUser": "email",* and the password *"inpPwd": "password'*) of the required set of data RSD. The HTML (HyperText Markup Language) element IDs *"inpUser"* and *"inpPwd"* respectively corresponding to one of fields of the webpage (e.g. a login request form) displayed to the user in order to require the user to provide the set of data RSD. The property *"mapping"* will be utilized in the following step 270. In another example where the property *"context"* changes, the types of information defined in the property *"mapping"* change accordingly to be, for example, the user's address, zip code, city and/or phone number.

According to the present embodiment, the property *"send method"* corresponds to a HTML element ID *"btnLogin"* and a HTML event *"click".* More precisely, in the property *"send_method'* it is defined that when the user clicks on a button (defined by the HTML element ID *"click"*) to trigger a data validation. The button is included in the webpage (corresponding to the HTML element ID *"btnLogin"*) displayed by the personal terminal 101, and is labeled for example as "Send" or "Login" or "Sign-in". Alternatively, it can be another HTML event different from *"click"* to replace the event *"click".* Furthermore, a KYC ("Know Your Customer") check is preferably performed during the execution of the onboarding step 2051.

After performing the onboarding step 2051, the website server 104 obtains entries in a database (e.g. a QRL database) with the properties *"app*/*domain", "context", "mapping"* and *"send_method'* of the set of setting data.

The integration step 2052 is then performed. The integration step 2052 comprises preferably inserting an integration code into a source code of the website, so as to define the purpose of displaying the webpage by the browser of the personal terminal 101. Said integration code is preferably made in a script language such as HTML 5. In addition, the website is defined by a unique name, such as a domain name. One example of said integration code is described below:

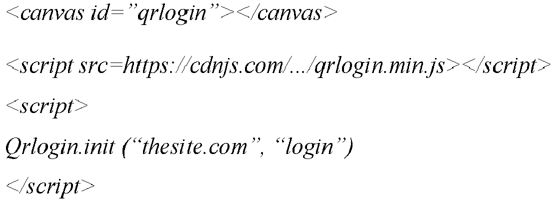

In the above-mentioned example, *"thesite.com"* is the name/address/subdomain of the website hosted on the website server 104. The webpage is a login webpage of said website and is to be displayed by the personal terminal 101. In addition, in terms of implementation, the above command *"<script src*=*https:*/*.... > <*/*script>"* is used to import a QRL library containing all logic which may be required by the data injection system 1 to operate on the browser of the personal terminal 101. The above command *"<canvas id*=*"qrlogin"><*/*canvas>"* is used to create an element to draw a QRCode. Furthermore, the second script with *"Qrlogin.init ("thesite.com", "login"*) initializes the QRL library for the above-mentioned context "login" on the website "thesite.com" hosted on the website server 104.

After the execution of the setting step 205, the key generation step 210 is then performed by the data injection destination 10, during a loading of the webpage to be displayed by the personal terminal 101 of the data injection destination 10, so as to generate a public key (e.g. the following *"PUBLIC_KEY*") and transmit the generated public key to the API executed by the data injection server 103.

More precisely, during the key generation step 210, the public key corresponding to the webpage is generated by the data injection destination 10 for the data injection. According to an embodiment, the public key is generated by the browser executed by the personal terminal 101.

A private key corresponding the public key is preferably generated by the data injection destination 10 in the current step 210. Preferably, said private key is also generated by the browser executed by the personal terminal 101. Preferably, the public key and the corresponding private key are generated at the same time by the browser. The public key and the private key both correspond to the displayed webpage and, preferably, to the set of data RSD required by the website. One example of the generated public key is described below:

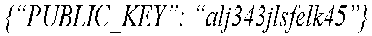

In the above-mentioned example, the HTML element *"PUBLIC KEY"* is filled with the generated public key *"alj343jlsfelk45".*

The data injection server 103 performs then the token generation step 220 configured to generate a token (represented as *"TK"* in an example below) according to the received public key, and to transmit the generated token to the data injection destination 10. Preferably, the generated token is transmitted to the webpage executed by the personal terminal 101. The token is a unique session ID and is preferably generated in a random way. Advantageously, the token can be, for example, a ULID (Universally Unique Lexicographically Sortable Identifier) or a UUID (Universally Unique Identifier). An ULID is a timestamp and a random number. One example of the generated token *"TK"* is described below:

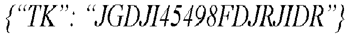

The channel creation step 230 is then performed so as to create, by using the token generated in the step 220, a secure channel SE between the data injection destination 10 and the data injection server 103. The secure channel SE allows safe data transfer between the data injection destination 10 and the data injection server 103. Preferably, the secure channel SE is established between the browser (executed by the personal terminal 101) and the data injection server 103. According to an embodiment, the secure channel SE is created according to a WebSocket protocol. Advantageously, the secure channel SE is a secured Websocket (WSS).

After the creation of the secure channel SE, the identification code generation step 240 is performed so as to generate, according to the token (e.g. the above-mentioned token *"TK"*)*,* a data injection identification code configured to activate the service application 113 executed by the portable computing device 102, wherein the data injection identification code is generated to be displayed by the data injection destination 10.

According to an embodiment, the current step 240 is executed in a way that the data injection server 103 send instructions via said secure channel SE to the browser of the personal terminal 101, in order to require the browser of the personal terminal 101 to generate, according to the token, the data injection identification code to be displayed on the screen of the personal terminal 101. The instructions are sent, for example, by using a Remote Procedure Call (RPC) technique. One example of the above-mentioned instructions is described below:

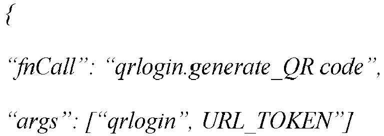

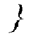

The instructions are executed to generate of the data injection identification code (e.g. by performing the function *"generate _QR code"*). The generated data injection identification code comprises information regarding the token, the data service application 113 and the injection server 103. Preferably, the generated data injection identification code comprises an URL address (e.g. "*URL*_*TOKEN"*) configured to direct the browser of the portable computing device 102 in order to activate the service application 113. The URL address *"URL_TOKEN",* for instance as "https://app.te.com/#/api/qrlogin?TK=JGDJI45498FDJRJIDR", is a value of the data injection identification code.

Advantageously, the data injection identification code is a Quick Response (QR) code. Alternatively, the data injection identification code can be another data encoding scheme or symbol such as a barcode, e.g. a Universal Product Code (UPC). One of purposes of generating and of using the data injection identification code (e.g. the QR code) is to replace a conventional manual input of the set of data required by the website. The data injection identification code displayed by the data output device (e.g. the screen) of the personal terminal 101 is preferably a two-dimensional pictogram code.

In addition, according to another embodiment, during the generation of the data injection identification code, the website verifies whether there is a HTTP cookie ("cookie" hereafter) is accessible by the browser of the personal terminal 101. The cookie is configured to store information (e.g. a Boolean flag) utilized to check whether the portable computing device 102 and the personal terminal 101 are a same computing device. The verification can be triggered by executing the function *"generate_QR code".* The following service application activation step 250 may possibly be performed according to the result of this cookie verification.

In addition, according to an embodiment, if the browser of the portable computing device 102 is previously directed to the URL address (*"URL_TOKEN"*) and/or previously generates data regarding the data injection identification code, the required set of data RSD corresponding to the data injection identification code (which comprises the URL address *"URL_TOKEN"*) is already stored and is accessible by the portable computing device 102. Preferably, the required set of data RSD corresponding to the data injection identification code is stored locally in the portable computing device 102.

The service application activation step 250 is then executed in order to use the data injection identification code to activate the service application 113. According to an embodiment where the personal terminal 101 and the portable computing device 102 are different computing devices, the user utilizes the portable computing device 102 to scan the data injection identification code displayed by the personal terminal 101, so that the URL address (e.g. *"URL_TOKEN"*) contained in the data injection identification code directs the browser of the portable computing device 102 to the URL address, which triggers the execution of the service application 113.

As mentioned above, the service application 113 can be a mobile application or a web application executed by the portable computing device 102, or a virtual mobile application executed by the browser executed by the portable computing device 102.

According to an embodiment where the personal terminal 101 and the portable computing device 102 are the same computing device, the portable computing device 102 cannot scan the data injection identification code generated by the portable computing device 102 itself. In this case, the portable computing device 102 verifies whether the required set of data RSD corresponding to the data injection identification code exists and is accessible by the browser of the portable computing device 102.

If the said required set of data RSD corresponding to the data injection identification code is found and is accessible by the browser of the portable computing device 102, the service application 113 is thus activated by an automatic redirect performed by the browser of the portable computing device 102 to the URL address *"URL_TOKEN".* No user intervention is required.

In contrast, if the required set of data RSD corresponding to the data injection identification code cannot be found or is not accessible by the browser of the portable computing device 102, the service application 113 is activated by the user clicking on the data injection identification code displayed by the portable computing device 102, so as to direct the browser of the portable computing device 102 to the URL address *"URL_TOKEN".* The portable computing device 102 is for example the user's smartphone comprising a touchscreen utilized to display digital contents comprising the data injection identification code and to allow the user to "select" the displayed data injection identification code by performing a gesture (e.g. pressing on the displayed data injection identification code) on the touchscreen with one or more fingers or a stylus. The invention is not limited to the gesture performed by the user to select the data injection identification code displayed on the touchscreen.

After the service application 113 is activated, the mapping request step 260 is then executed in a way that the service application 113 sends to the API executed by the data injection server 103, the token (e.g. the above-mentioned token *"TK"*) and a mapping request for types of information of the required set of data RSD.

The mapping reply step 270 is performed in a way that the data injection server 103 replies to the service application 113, a mapping request reply comprising the types of information of the required set of data RSD. The mapping request reply is generated by the data injection server 103 according to the set of setting data previously determined during the setting step 205. In the present embodiment, the set of setting data comprises the properties *"app*/*domain", "context", "mapping",* and *"send method",* wherein the *"mapping"* defines the types of information of the required set of data RSD. It is noted that the mapping request reply comprises only the types of information, not the content of the required set of data RSD (previously) provided by the user. One example of the mapping request reply is described below:

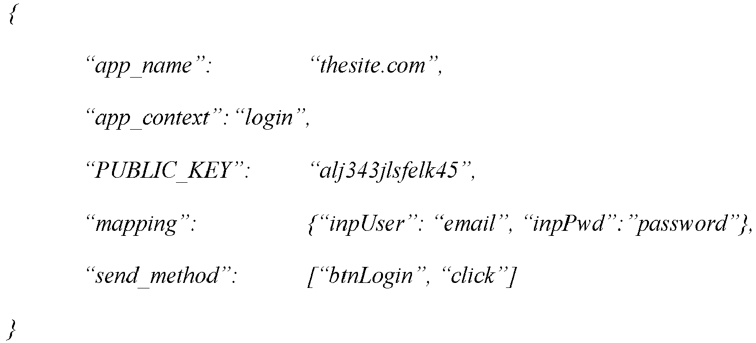

In the above-mentioned example, the property *"app_name"* corresponds to the name/address/subdomain (e.g. *"thesite.com"*) of the website hosted on the website server 104. The properties *"app_context"* and *"PUBLIC_KEY'* respectively correspond to the process (e.g. a user login process) which requires the data injection and the public key for the data injection. The property *"mapping"* in the above-mentioned example indicates that the two types of information being utilized in the login process are an email address (e.g. the above-mentioned *"email"*) and a password (e.g. *"password'*) respectively utilized as an input user identity (e.g. the above-mentioned *"inpUser"*) and an input password account (e.g. *"inpPwd"*) utilized by the user for accessing the website, which will be validated by triggering an event *"click".* The property *"send method"* correspond to the HTML element ID *"btnLogin"* and the event *"click".* Alternatively, it can be another HTML event different from *"click"* to replace the event *"click".*

The package generation step 280 is then performed by the service application 113 in order to provide the data injection server 103 with an encrypted data injection package generated according to the received mapping request reply. During the current step 280, the service application 113 (executed by the portable computing device 102) verifies, preferably by calling the API of the data injection server 103, whether the website (e.g. *"thesite.com"*) hosted on the website server 104 is still active or not.

The package generation step 280 comprises a data retrieval step 281, a data encryption step 282 and a package delivery step 283. The data retrieval step 281 is configured to generate a data injection package comprising the required set of data RSD retrieved according to the types of information of the required set of data RSD. More precisely, to properly retrieve the required set of data RSD, the service application 113 reads the types of information contained in the received mapping request reply, such as the email address (e.g. *"email"*) and the password (e.g. *"password'*) provided in the property *"mapping"* of the exemplary mapping request reply. One example of the generated data injection package is described below:

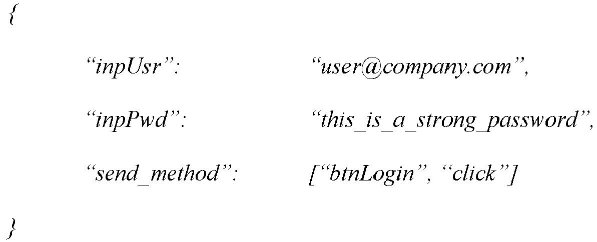

The exemplary data injection package comprises thus *"user@company.com"* and *"this_is_a_strong_password"* which are retrieved by the service application 113 according to the token (e.g. "*TK*" with the value *"JGDJI45498FDJRJIDR"*) and the types of information *"email"* and *"password"* in the exemplary mapping request reply. According to an embodiment, the data injection package is generated by replacing said types of information (e.g. the *"email"* and *"password"*) contained in the mapping request reply, respectively with a corresponding portion of data content (e.g. *"user@company.com"* and *"this is*_*a*_*strong_password"*) of the retrieved required set of data RSD. The corresponding portions of data content are, for example, the email address and the password which are previously provided by the user and are therefore stored in the portable computing device 102.

Before sending the data injection package to the data injection server 103, the service application 113 performs the data encryption step 282 in order to improve the data security for data transmission. The data encryption step 282 is configured to encrypt the data injection package with the public key (e.g. *"PUBLIC_KEY"* with the value *"alj343jlsfelk45"*)*.* The package delivery step 283 configured to send the encrypted data injection package to the data injection server 103 is then performed by the service application 113.

The data injection server 103 receives thus the encrypted data injection package and executes then the package transfer step 290 configured to transfer, via the secure channel SE created in the step 230, the encrypted data injection package to the data injection destination 10. The encrypted data injection package is preferably transferred, via the secure channel SE, to the webpage executed by the browser of the personal terminal 101. The encrypted data injection package is transferred, for example, by using an RPC technique.

Before being transferred, the encrypted data injection package is given information which describes that in the following data injection step 300, the use (e.g. the following field filling injection 302) of the encrypted data injection package. In addition, as the data injection server 103 has only the public key but not have the private key, the data injection server 103 is unable to decrypt the encrypted data injection package to obtain the required set of data RSD. Therefore, the data injection server 103 is a secure data relay for the data transmission performed between the portable computing device 102 and the data injection destination 10 (i.e. the personal terminal 101, the website server 104).

After receiving the encrypted data injection package sent by the data injection server 103, the data injection destination 10 executes the data injection step 300 so as to retrieve, from the encrypted data injection package, the set of data RSD required by the website. According to an embodiment, the data injection step 300 is executed by the browser of the personal terminal 101.

The data injection step 300 comprises a package decryption step 301 and a field filling injection step 302. The package decryption step 301 is configured to decrypt, by using the private key generated in the step 210, the encrypted data injection package to obtain the required set of data RSD. The field filling injection step 302 is then performed to fill each of the fields of the webpage with a corresponding data portion contained in the required set of data RSD obtained in the package decryption step 301, wherein the correspondence between the fields and the corresponding data portions is provided in the received encrypted data injection package generated according to the mapping request reply.

The fields of the webpage correspond respectively to one of the HTML elements of the webpage. The HTML elements of the webpage corresponds thus respectively to one of the data portions contained in the required set of data RSD. For example, the HTML elements with ID *"inpUsr"* and *"inpPwd"* of the webpage are thus respectively filled with the data *"user@company.com"* and *"this is*_*a_strong_password".*

The webpage comprising the HTML elements filled with the data portions provided in the required set of data RSD is then verified by the website server 104. The validation occurs the same way as if credentials were manually entered. In a preferable but not limited way, the verification is initiated by an event *"click"* which is triggered on the HTML element ID *"btnLogin".* If the required set of data RSD is validated, the data injection is successful. The website allows thus the user to continue visiting the website (e.g. accessing the website and/or using functions provided by the website).

The data injection system and method are configured to perform, under control of the data injection server 103, a safe, fast and convenient data injection which allows a user to use the portable computing device 102 to provide a set of data RSD required by the website that the user wishes to access.

As mentioned above, the invention does not allow the portable computing device 102 to send directly the required set of data RSD to the webpage executed by the browser of the personal terminal 101. Furthermore, the invention prevents the browser of the personal terminal 101 from communicating directly with the portable computing device 102 on the types of information of the required set of data RSD. The invention reduces thus the risk which may occur during the data transmission and communication between the personal terminal 101 and the portable computing device 102.

The invention proposes the use of the data injection server configured to be a secure data relay which performs at least following two functions (a) and (b): (a) communicating with the portable computing device on the types of information of the required set of data RSD, and (b) receiving, from the portable computing device, the encrypted data injection package which comprises the required set of data RSD retrieved according to the types of information. As the data injection server has only the public key but not the private key, which makes the data injection server unable to decrypt the encrypted data injection package to obtain the required set of data RSD.

The invention allows thus following advantages. Firstly, the user's important data (i.e. the above-mentioned required set of data RSD) does no longer need to be stored in a centralized storage means. Secondly, the user keeps a full control on their data. In addition, compared to the conventional methods, the data injection of the invention is more flexible and user friendly. The data injection of the invention also prevents from a data leak because the user does no longer need to fill the fields of the webpage by manually entering the data through a keyboard. The set of data RSD required by the website will not be detected by a spyware or by a person surrounded by the user. It allows therefore the user to set up stronger passwords which may be different from each other and are used to access different websites. The stronger passwords can be passwords with higher complexity and greater entropy. The user does no longer need to manually enter the passwords each time to access respective websites. Furthermore, it also allows the service application 113 to auto-generate stronger passwords.

For the above reasons, the data injection of the invention is secure, convenient, efficient, and allows the user to provide the webpage with the set of data RSD required by the website.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A data injection system (1) configured to perform a data injection which allows a user to use a portable computing device (102) to provide a set of data (RSD) required by a webpage executed by a data injection destination (10), the data injection destination (10) comprising a personal terminal (101) utilized to execute and display to the user the webpage of a website; the data injection system (1) being **characterized in** comprising:
- a data injection server (103) configured to:
• generate a token (TK) according to a public key corresponding to the webpage;
• generate, a mapping request reply comprising types of information of the required set of data (RSD);
• transfer to the data injection destination (10) an encrypted data injection package generated by the service application (113);
- the service application (113), being executed by the portable computing device (102) and being configured to:
• generate said encrypted data injection package, according to the mapping request reply generated by the data injection server (103), wherein the encrypted data injection package comprises the required set of data (RSD) retrieved according to the mapping request reply;
wherein after receiving the encrypted data injection package sent by the data injection server (103), the data injection destination (10) retrieves, from the encrypted data injection package, the required set of data (RSD) required by the webpage of the website.

2. The data injection system (1) according to the preceding claim, wherein:
- a secure channel (SE) configured to allow safe data transfer between the data injection destination (10) and the data injection server (103), is created by using the token (TK), the secure channel (SE) being established between a browser executed by the personal terminal (101) and the data injection server (103).

3. The data injection system (1) according to claim 1 or claim 2, wherein the service application (113) is configured to generate a data injection package comprising the required set of data (RSD) retrieved according to the token (TK) and the types of information of the required set of data (RSD), wherein said types of information are contained in the mapping request reply.

4. The data injection system (1) according to the preceding claim, wherein the service application (113) is configured to encrypt the data injection package by using the public key.

5. The data injection system (1) according to any one of claims 1 to 4, wherein the service application (113) is activated by using a data injection identification code generated according to the token (TK); said data injection identification code comprising a Uniform Resource Locator (URL) address configured to direct a browser executed by the portable computing device (102) in order to activate the service application (113) said data injection identification code being one of following codes: a Quick Response (QR) code, a Universal Product Code (UPC), or another data encoding scheme or symbol.

6. The data injection system (1) according to claim 5, wherein during the generation of the data injection identification code, the personal terminal (101) verifies whether a HTTP cookie exists and is accessible by a browser of the personal terminal (101), the HTTP cookie being configured to store information utilized to check whether the portable computing device (102) and the personal terminal (101) are a same computing device.

7. The data injection system (1) according to claim 5 or claim 6, wherein if the browser of the portable computing device (102) is previously directed to the URL address and/or previously generates data regarding the data injection identification code, the required set of data (RSD) corresponding to the data injection identification code is already stored and is accessible by the portable computing device (102).

8. The data injection system (1) according to any one of claims 5 to 7, wherein the data injection identification code displayed by the personal terminal (101) is scanned by using an image capturing device of the portable computing device (102), so that the URL address contained in the scanned data injection identification code directs the browser of the portable computing device (102) to the URL address, which triggers the execution of the service application (113).

9. The data injection system (1) according to any one of claims 5 to 7, wherein when the personal terminal (101) and the portable computing device (102) are a same computing device.

10. The data injection system (1) according to the preceding claim combined with claim 5, wherein:
- if said required set of data (RSD) corresponding to the data injection identification code is found and is accessible by the browser of the portable computing device (102), the service application (113) is activated by an automatic redirect performed by the browser of the portable computing device (102) to the URL address; or
- if said required set of data (RSD) cannot be found or is not accessible by the browser of the portable computing device (102), the service application (113) is activated by an automatic redirect performed by the user clicking on the data injection identification code displayed by the portable computing device (102), so as to direct the browser of the portable computing device (102) to the URL address.

11. The data injection system (1) according to any one of claims 1 to 10, wherein the service application (113) sends to the data injection server (103) the token (TK) and a mapping request for types of information of the required set of data (RSD).

12. The data injection system (1) according to any one of claims 2 to 11, wherein the encrypted data injection package is transferred, via the secure channel (SE), to the webpage executed by the browser of the personal terminal (101).

13. The data injection system (1) according to any one of claims 1 to 12, wherein:
- the public key and a corresponding private key are generated by the data injection destination (10) during a loading of the webpage displayed by the personal terminal (101), and is transmitted to the data injection server (103);
- the data injection destination (10) is configured to decrypt, by using the private key, the encrypted data injection package to obtain the required set of data (RSD);
- each of fields of the webpage is filled with a corresponding data portion contained in the required set of data (RSD) obtained by decrypting the encrypted data injection package;
- the webpage which is filled with the data portions provided in the required set of data (RSD), is verified by a website server (104) hosting the website, in order to determine whether the user can continue visiting the website.

14. The data injection system (1) according to any one of claims 1 to 13, wherein:
- the service application (113) is a mobile application or a web application executed by the portable computing device (102), or a virtual mobile application executed by a browser of the portable computing device (102); and/or
- the required set of data (RSD) is previously stored in a storage means accessible by the portable computing device (102); and/or
- wherein the required set of data (RSD) comprises login credentials and/or the payment-related information, or any data requested by a web form; and/or
- the injection server (103) executes an Application Programming Interface (API) configured to proceed with its data transmission and data communication with the service application (113) executed by the portable computing device (102).

15. A data injection method (200) configured to perform a data injection which allows a user to use a portable computing device (102) to provide a set of data (RSD) required by a webpage executed by a data injection destination (10), the data injection destination (10) comprising a personal terminal (101) utilized to execute and display to the user the webpage of a website; the data injection method (200) being **characterized in** comprising steps performed by the data injection system (1) according to any one of the preceding claims.
